**Europäisches Patentamt**

**European Patent Office**

**Office européen des brevets**

(19)

(11) Veröffentlichungsnummer: **0 037 570**
**B1**

(12) **EUROPÄISCHE PATENTSCHRIFT**

(45) Veröffentlichungstag der Patentschrift:
02.05.85

(21) Anmeldenummer: **81102548.5**

(22) Anmeldetag: **03.04.81**

(51) Int. Cl.⁴: **A 01 D 34/82**

(54) Kabelführung für einen Elektrorasenmäher.

(30) Priorität: **03.04.80 DE 3013227**

(43) Veröffentlichungstag der Anmeldung:
**14.10.81 Patentblatt 81/41**

(45) Bekanntmachung des Hinweises auf die Patenterteilung:
**02.05.85 Patentblatt 85/18**

(84) Benannte Vertragsstaaten:
**BE CH IT LI NL**

(56) Entgegenhaltungen:
**EP - A - 0 003 549**
**DE - U - 1 816 947**
**FR - A - 1 499 986**
**US - A - 3 082 983**
**US - A - 3 375 338**

(73) Patentinhaber: **Wolf-Geräte GmbH, Gregor-Wolf-Strasse Postfach 860 und 880, D-5240 Betzdorf/Sieg (DE)**

(72) Erfinder: **Mölders, Victor, Schorenweg 24, D-4788 Warstein 1 (DE)**

(74) Vertreter: **Koch, Günther, Dipl.-Ing. et al, Kaufingerstrasse 8, D-8000 München 2 (DE)**

## Beschreibung

Die Erfindung bezieht sich auf eine Kabelführung für Elektrorasenmäher mit einer am Griffgestänge des Mähers vorgesehenen querverlaufenden Führungsstange, an der entlang ein Kabelhalter unter seitlichem auf das Kabel wirkendem Zug abrollbar ist und an deren beiden Enden kurze Seitenschenkel im wesentlichen rechtwinklig abgebogen sind.

Eine solche Kabelführung ist aus der EP-A-3549 bekannt. Bei dieser Kabelführung wurde angestrebt, das Kabel an einer Stelle zu führen, die seitlich möglichst weit von der Begrenzung des Rasenmähers entfernt liegt. Der an sich richtige Grundgedanke dieser Anordnung zielte darauf ab, das Kabel möglichst weit aus dem Gefahrenbereich der umlaufenden Messer zu entfernen und die Führung des Rasenmähers dadurch bequemer zu gestalten, dass das Kabel aus dem Bedienungsbereich der den Mäher führenden Person entfernt ist.

Es hat sich jedoch in der Praxis gezeigt, dass diese bekannte Kabelführung trotz der unbestreitbaren Vorteile in bedienungstechnischer Hinsicht bei bestimmten Gärten, bei denen wiederholt zwischen Bäumen oder Sträuchern hindurchgefahren werden muss, auch Nachteile mit sich bringen kann, die insbesondere darin liegen, dass der seitlich ausladende Führungsbügel die freie Beweglichkeit des Mähers behindert und beim Mähen an Hindernissen, beispielsweise Bäumen, Sträuchern oder auch Hauswänden, anstösst und ein manuelles Zurückschieben notwendig macht, wobei der zwischen Motoranschluss und Kabelhalterung verlaufende Kabelabschnitt auf den Boden fällt und in ungünstigen Fällen sogar vom umlaufenden Messer angeschnitten werden kann.

Der Erfindung liegt daher die Aufgabe zugrunde, eine auch nachträglich am Griffgestänge des Rasenmähers noch anbaubare Kabelführung zu schaffen, die bei bequemer Bedienung ein selbsttätiges Umschlagen des Kabels gewährleistet und dieses aus dem Schnittbereich der Messer entfernt hält, ohne dass hierdurch die Bewegungsfreiheit des Mähers beeinträchtigt würde.

Gelöst wird die gestellte Aufgabe durch die im Kennzeichnungsteil des Patentanspruchs angegebenen Merkmale.

Durch die Erfindung wird erreicht, dass die Breite des Mähers durch die Kabelführung nicht verbreitert wird, so dass an Hindernissen vorbeigefahren werden kann, ohne dass das Kabel in den Gefahrenbereich der Messer gerät.

Der Erfindung liegt daher die Erkenntnis zugrunde, dass zwar eine automatische Überführung von rechts nach links und umgekehrt je nach dem auf dem Kabel lastenden Zug von Vorteil ist, jedoch diese Verfahrbarkeit begrenzt werden sollte auf die Breite des Rasenmähers. Durch die Klemmhalterung der Führungsstange wird ein Anbringen sowohl an parallel verlaufenden Griffholmen als auch an Griffholmen möglich, die sich überkreuzend angeordnet sind.

Es ist zwar durch die DE-U-1 816 947 bereits eine Kabelführung für Rasenmäher bekannt, bei der der Kabelhalter in horizontaler Richtung über die Breite des Rasenmähers verschoben werden kann. Hierbei läuft der Kabelhalter jedoch über den horizontalen Teil des Griffgestänges und fällt jeweils am Ende seines Bewegungsganges ein Stück an den Führungsholmen herunter, so dass bei einer Bewegungsänderung ein Anheben des Kabelhalters erforderlich ist, so dass dieser nicht, wie im Falle der Erfindung, selbsttätig hin und her laufen kann. Im übrigen hat es sich als nachteilig erwiesen, wenn der Kabelhalter bei einer Richtungsänderung über den Führungsgriff hinwegläuft, an dem die Hände der Bedienungsperson angreifen, da diese dann zeitweilig den Griff loslassen müssen, was zu unkontrollierten Fahrbewegungen führen kann.

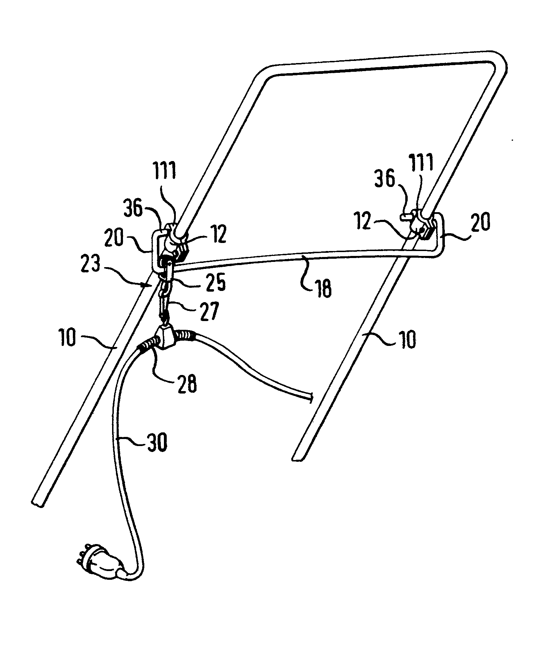

Nachstehend wird ein Ausführungsbeispiel der Erfindung anhand der Zeichnung beschrieben. Die einzige Figur der Zeichnung zeigt eine perspektivische Darstellung des Griffgestänges eines Rasenmähers mit einer angebauten erfindungsgemässen Kabelführung.

An den Seitenholmen 10 des Griffgestänges eines nicht dargestellten Rasenmähers sind Lagerbuchsen 111 mittels Schellen 12 angeklemmt und lösbar befestigt. In diese Lagerbuchsen 111 greifen nach innen gerichtete Schwenkzapfen 36 eines Bügels ein, der zwei von den Schwenkzapfen 36 rechtwinklig abgebogene Seitenschenkel 20 und eine diese verbindende Führungsstange 18 aufweist. Die Länge der Führungsstange 18 ist der Breite des Griffgestänges angepasst, so dass durch die Kabelführung die Breite des Mähers nicht wesentlich vergrössert wird.

Die Führungsstange 18 führt den Kabelhalter 23, der eine Führungsgabel 25 mit Öse aufweist, in die ein Karabinerhaken 27 einhängbar ist, der eine auf das Kabel 30 aufgezogene Klemmhülse 28 trägt.

## Patentanspruch

Kabelführung für Elektrorasenmäher mit einer am Griffgestänge (10) des Mähers vorgesehenen querverlaufenden Führungsstange (18), an der entlang ein Kabelhalter (25, 27, 28) unter seitlichem auf das Kabel (30) wirkendem Zug abrollbar ist und an deren beiden Enden kurze Seitenschenkel (20) im wesentlichen rechtwinklig abgebogen sind, dadurch gekennzeichnet, dass die Länge der Führungsstange (18) der Breite des Griffgestänges (10) angepasst ist und dass an den freien Enden der Seitenschenkel (20) nach innen abgebogene Schwenkzapfen (36) ansetzen, die in an den Seitenholmen des Griffgestänges (10) anklemmbare Lagerbuchsen (111) eingreifen und gegen Herausrutschen gesichert sind.

## Claim

Cable guide for electric lawn mowers with a guide rod (18) provided on the handle linkage (10) of the mower and extending in transverse direction, wherein a cable holder (25, 27, 28) is mounted to run along the guide rod when subjected to lateral tension by means of the cable (30) and wherein short lateral shanks (20) are bent off substantially in rectangular direction, characterized in that the length of the guide rod (18) is adapted to the width of the handle linkage (10) and that pivot pins (36) are provided at the free ends of the lateral shanks (20) which are bent inwardly and engage bushings (111) which can be clamped to the handle bars of the handle linkage (10) and which pins are secured against removal.

**Revendication**

Guidage de câble pour tondeuse à gazon électrique qui comporte une tige de guidage transversale (18) prévue sur le tringlage de poignée (10) de la tondeuse, tige de guidage le long de laquelle un support de câble (25, 27, 28), peut rouler sous l'effet d'une traction latérale agissant sur le câble (30) et aux deux extrémités de laquelle sont coudées en substance à angle droit de courtes ailes latérales (20), caractérisé en ce que la longueur de la tringle de guidage (18) est adpatée à la largeur du tringlage de poignée (10) et en ce qu'aux extrémités libres des ailes latérales (20) s'appliquent des axes de pivotement (36), coudés vers l'intérieur, qui s'engagent dans des manchons (111) pouvant être serrés sur les longerons latéraux du tringlage de poignée (10) et qui sont maintenus contre tout glissement vers l'extérieur.